# FASCICULE DE BREVET EUROPEEN

(11) **EP 1 765 631 B1**
(45) Date de publication et mention de la délivrance du brevet: **22.03.2017**
(21) Numéro de dépôt: 05778784.8
(22) Date de dépôt: 21.06.2005
(51) Int. Cl.: B60L 9/18, B60L 11/00, B60M 7/00, B60L 11/18, B60L 11/16

(54) **UTILISATION D'UN DISPOSITIF D'ALIMENTATION, PROCEDE D'ALIMENTATION DE CONSOMMATEURS D'ELECTRICITE DE CE VEHICULE DE TRACTION ET SUPPORT D'ENREGISTREMENT DE CE PROCEDE**
VERWENDUNG EINER STROMVERSORGUNGSVORRICHTUNG, VERFAHREN ZUR STROMVERSORGUNG VON STROMVERBRAUCHERN EINES TRIEBFAHRZEUGES UND DATENTRÄGER FÜR DIESES VERFAHREN
USE OF A POWER SUPPLY DEVICE, METHOD FOR SUPPLYING POWER TO THE ELECTRICITY USERS OF A TRACTION VEHICLE AND A RECORD CARRIER FOR SAID METHOD

(30) Priorité: 21.06.2004 FR 0406731
(43) Date de publication de la demande: 28.03.2007
(73) Titulaire: ALSTOM Transport Technologies, 93400 Saint-Ouen (FR)
(72) Inventeur: NICOD, Laurent, F-64320 IDRON (FR); PORCHER, Frédéric, F-65000 TARBES (FR)
(74) Mandataire: Lavoix
(86) Numéro de dépôt international: PCT/FR2005/001561
(87) Numéro de publication internationale: WO 2006/008391

(56) Documents cités:
- EP-A1- 1 245 432
- US-A1- 2002 174 798
- US-B1- 6 294 886
- US-B1- 6 441 581
- US-B2- 6 557 476
- PATENT ABSTRACTS OF JAPAN vol. 0183, no. 93 (M-1643), 22 juillet 1994 (1994-07-22) & JP 06 113407 A (ISUZU MOTORS LTD; others: 01), 22 avril 1994 (1994-04-22)

## Description

L'invention concerne l'utilisation d'un dispositif d'alimentation embarqué sur un véhicule de traction destiné à effectuer un déplacement sur des voies, comprenant des tronçons de voies équipés d'un dispositif de recharge et des tronçons de voies non équipés d'un dispositif de recharge, le dispositif d'alimentation comprenant :
- au moins un moteur électrique ; et
- un système de stockage d'énergie électrique comprenant un ensemble non capacitif comportant un ou plusieurs volants d'inertie ou une ou plusieurs batteries de puissance et un ou plusieurs ensembles supercapacitifs comprenant plusieurs supercapacités connectées en série et/ou en parallèle, l'ensemble non capacitif présente une puissance maximale admissible, une puissance maximale délivrable, une dynamique de puissance maximale admissible et une dynamique de puissance maximale délivrable, le véhicule étant adapté pour fonctionner selon des performances dynamiques de traction dans des phases de fonctionnement au cours desquelles le véhicule est alimenté par un dispositif de recharge non embarqué sur le véhicule de traction.

L'invention concerne également un procédé d'alimentation de consommateurs d'électricité d'un véhicule de traction et un support d'enregistrement comportant des instructions pour l'exécution du procédé.

Les véhicules de traction sont couramment utilisés pour assurer le transport de voyageurs dans des zones urbaines ou suburbaines. Les véhicules de traction mis en oeuvre sont alimentés par une perche ou un pantographe coopérant avec une caténaire ou par un rail d'alimentation électrique disposé sur le sol, le long de la voie.

Toutefois, ces dispositifs d'alimentation nécessitent des frais d'installation élevés et une rupture de caténaire ou un problème électrique sur une portion du rail d'alimentation, bloque l'ensemble du trafic ferroviaire.

Pour remédier à cet inconvénient, il est connu de monter un système de stockage d'énergie sur le toit du véhicule de traction. Un tel système est constitué d'un ou plusieurs volants d'inertie ou d'une ou plusieurs batteries.

Toutefois, un tel système ne fournit pas assez de puissance pour maintenir une vitesse suffisante au véhicule de traction et pour effectuer un déplacement sur la distance séparant plusieurs stations.

US 2002/0174798 A1 décrit un véhicule de traction comportant un dispositif d'alimentation selon le préambule de la revendication 1.

EP 1 245 432 A1 décrit un dispositif d'alimentation d'un module de traction, utilisé pour permettre un fonctionnement identique du module de traction que celui-ci soit alimenté directement par un système d'alimentation autonome ou par une caténaire.

L'invention a pour but de fournir un dispositif d'alimentation embarqué ne présentant pas l'inconvénient mentionné ci-dessus, et en particulier de fournir une énergie et une puissance suffisantes pour alimenter le véhicule de traction sur une distance de plusieurs stations en maintenant des performances dynamiques du véhicule équivalentes à celle du véhicule alimenté par un système classique (caténaire ou rail de courant ou moteur thermique).

A cet effet, l'invention a pour objet l'utilisation d'un dispositif d'alimentation du type précité, selon la revendication 1.

Suivant des modes particuliers de l'utilisation, celle-ci comporte une ou plusieurs des caractéristiques suivantes selon les revendications dépendantes 2 à 6.

L'invention a également pour objet un procédé d'alimentation de consommateurs d'électricité d'un véhicule de traction, selon la revendication 7.

Suivant un mode de réalisation particulier du procédé, le procédé d'alimentation est selon la revendication 8.

L'invention a également pour objet un support d'enregistrement selon la revendication 9.

L'invention sera mieux comprise à la lecture de la description qui va suivre, donnée uniquement à titre d'exemple et faite en se référant aux dessins annexés, sur lesquels :
- la Fig.1 est un schéma électrique d'un circuit de puissance du dispositif d'alimentation en énergie électrique utilisé selon l'invention ;
- la Fig.2 est un schéma fonctionnel du circuit de puissance représenté sur la Fig.1 ;
- la Fig.3 est un graphe représentant schématiquement l'évolution temporelle des échanges de puissance du dispositif d'alimentation utilisé selon l'invention ; et
- la Fig.4 est un graphe représentant schématiquement l'évolution temporelle des échanges de dynamique de puissance du dispositif d'alimentation utilisé selon l'invention.

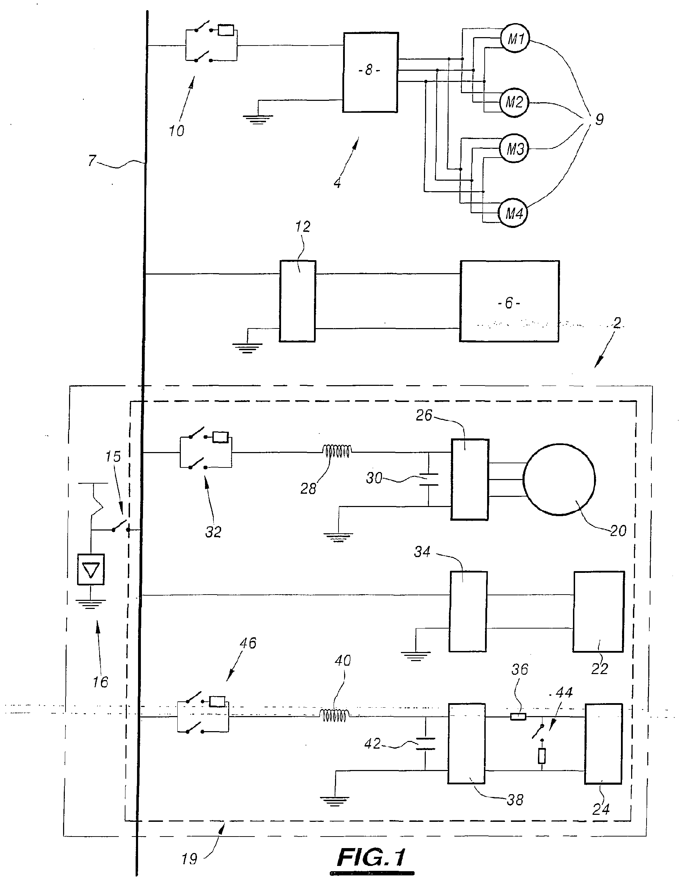

Un dispositif d'alimentation 2 est illustré schématiquement sur la Fig.1. Il est apte à procurer de l'électricité à une chaîne de traction 4 du véhicule et à des équipements auxiliaires 6 par l'intermédiaire d'un bus de puissance 7.

La chaîne de traction 4 comprend un convertisseur 8, raccordé à quatre moteurs 9 électriques. Ces moteurs 9 sont réversibles et sont en particulier adaptés pour générer un couple de traction du véhicule lorsqu'ils sont alimentés par le dispositif d'alimentation 2 et un couple de freinage fournissant de l'électricité au dispositif d'alimentation 2, lors des freinages électriques du véhicule.

Le convertisseur 8 est apte à transformer la tension fournie par le bus de puissance 7 de manière à générer une tension alternative d'alimentation des moteurs 9. A cet effet, une première borne d'entrée du convertisseur 8 est raccordée au bus 7 et une seconde borne d'entrée du dispositif 8, est raccordée à la masse.

Un circuit de précharge 10 est raccordé au convertisseur 8 et au bus de puissance 7. Il comprend un dipôle formé d'un interrupteur et d'une résistance, connecté en parallèle à un interrupteur. Il vise à limiter l'intensité du courant attaquant la borne d'entrée du convertisseur 8 lors du démarrage du véhicule.

Les équipements auxiliaires 6 comprennent l'ensemble des consommateurs d'électricité qui ne participent pas à la propulsion du véhicule de traction tel que par exemple l'électronique de bord, le dispositif d'éclairage, les moteurs des compresseurs de climatisation, etc.

Les équipements auxiliaires sont raccordés à un convertisseur 12, lui-même connecté au bus de puissance 7.

Le dispositif d'alimentation 2 comprend un pantographe 15 de connexion à une caténaire 16 et un système de stockage d'énergie 19.

La caténaire 16 est propre à alimenter en électricité le système de stockage d'énergie 19. Elle n'est pas embarquée sur le véhicule et est montée uniquement tout au long du rail. Elle est formée soit par une structure de fils de contact et de fils porteurs suspendus, soit par un rail d'alimentation en électricité disposé par terre, le long de la voie et sur lequel frottent des frotteurs solidaires du véhicule de traction, ce dernier cas particulier de caténaire est généralement connu sous les termes de « rail de courant ».

Le pantographe 15 est propre à se connecter à la caténaire afin que celle-ci complète l'énergie stockée dans le système de stockage d'énergie 19 lorsque le véhicule de traction est en arrêt à une station, comme cela sera explicité dans la suite de la description.

Le système de stockage 19, représenté sur la figure 1, comprend d'une part, un ensemble non capacitif comprenant un volant d'inertie 20 et une batterie 22 et, d'autre part, un ensemble supercapacitif 24. Ils sont connectés au bus de puissance 7. Ils sont adaptés pour fonctionner en régime de décharge lors de phases d'alimentation des équipements auxiliaires 6 et de la chaîne de traction 4 et, pour fonctionner en régime de charge lors de phases de récupération de l'énergie électrique générée par le couple de freinage de la chaîne de traction 4 ou lors de phases de recharge depuis la caténaire par l'intermédiaire du pantographe 15.

De façon connue en soi, le volant d'inertie 20 comporte un moteur dont le rotor fait office de masse d'inertie. Le volant d'inertie 20 est raccordé à un convertisseur 26 pour transformer le courant continu en courant alternatif et réguler la puissance du volant.

Une première borne d'entrée du convertisseur 26 est raccordée à une bobine 28 et à une borne d'un condensateur 30. Une seconde borne d'entrée du convertisseur 26 est raccordée à l'autre borne du condensateur 30 et à la masse. La bobine 28 et le condensateur 30 forment un filtre de rejet de certaines harmoniques du courant.

Un circuit de précharge 32, identique au circuit 10, est raccordé en série à la bobine 28 pour protéger la bobine 28 et le condensateur 30 lors du démarrage du volant 20.

La batterie 22 est une batterie de forte puissance, généralement de plusieurs centaines de kilowatts. Elle est formée par un accumulateur électrochimique par exemple au plomb ou au nickel. Elle est propre à alimenter la chaîne de traction 4 pour propulser le véhicule de traction. La batterie 22 est raccordée à un convertisseur de tension 34 qui est lui-même raccordé au bus de puissance 7.

L'ensemble supercapacitif 24 comprend plusieurs supercapacités connectées en série et/ou en parallèle. L'ensemble 24 est adapté pour fournir une puissance d'au moins 50 kilowatts. Au sens du brevet, une supercapacité est un condensateur dont la capacité est supérieure à 1000 Farads.

L'ensemble supercapacitif est constitué par exemple, par plusieurs centaines de supercapacités. Par exemple, une supercapacité d'une capacité de 2600 Farads du type référencé DCAP0010A02, commercialisée sous la marque déposée BOOSTCAP pourra être utilisée.

La supercapacité est un composant électrostatique de stockage de charges électriques, formé par la création d'une double couche électrochimique. Elle comporte deux électrodes conductrices contenant du charbon actif, séparées par une solution ionique (électrolyte). Des charges électriques s'accumulent à l'interface entre la solution ionique et l'électrode. L'interface entre les charges agit comme un diélectrique. L'énergie stockée est le résultat d'un effet capacitif. Aucune réaction d'oxydoréduction n'est réalisée.

De par sa constitution, l'ensemble supercapacitif 24 est un composant de stockage d'énergie permettant de fournir une dynamique de puissance plus importante et une énergie plus faible que les autres composants de stockage du type batterie de puissance ou volant d'inertie.

Par exemple, un ensemble supercapacitif comprenant 1200 à 1700 supercapacités fournit une puissance de l'ordre de 1,3 mégawatts (mW) et une énergie de l'ordre de 3 kilowattheure (kWh) et une dynamique de puissance de plusieurs centaines de kilowatts par seconde.

Une borne de l'ensemble supercapacitif 24 est raccordée à un dispositif 36 de protection en courant.

Un hacheur 38, raccordé à l'ensemble supercapacitif 24, permet d'adapter la tension du bus 7 à la tension aux bornes de l'ensemble supercapacitif. Une première borne d'entrée du hacheur 38 est raccordée à une bobine 40 et à une borne d'un condensateur 42. Une seconde borne d'entrée du hacheur 38 est raccordée à l'autre borne du condensateur 42 et à la masse.

Un dispositif de décharge 44 est connecté en parallèle aux bornes de l'ensemble supercapacitif 24 pour décharger celui-ci, par exemple lors d'opérations de maintenance de celui-ci.

Un circuit de précharge 46, identique au circuit 10, est raccordé en série à la bobine 40.

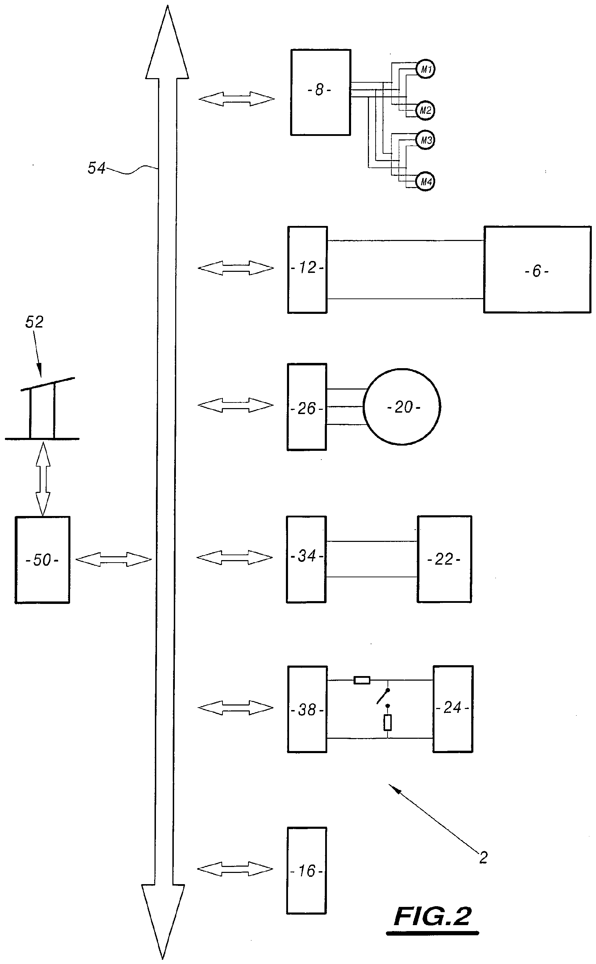

Le système de stockage d'énergie 19 décrit en liaison avec les figures 1 et 2, comporte une batterie, un volant d'inertie et un ensemble supercapacitif. Selon une variante de réalisation de l'invention, ce système 19 comprend plusieurs batteries et/ou plusieurs volants d'inertie et un ensemble supercapacitif ou encore plusieurs ensembles supercapacitifs.

La Fig.1 représente un exemple de réalisation de l'invention dans lequel le véhicule de traction est équipé de quatre moteurs, en variante un nombre différent de moteurs est monté sur le véhicule de traction.

Comme illustré sur la Fig.2, le dispositif d'alimentation 2 comprend également un calculateur 50 apte à piloter les convertisseurs 8, 12, 26, 34 et le hacheur 38 pour alimenter la chaîne de traction 4 et les équipements auxiliaires 6 ainsi que pour gérer la charge et la décharge du système de stockage 19.

A cet effet, le calculateur 50 est connecté à un réseau informatique de bord 54, qui est raccordé à un manipulateur de conduite 52, aux convertisseurs 8, 12, 26 et 34 et au hacheur 38. Le calculateur 50 est propre à mettre en oeuvre un programme stocké sur un support d'enregistrement, permettant de mettre en oeuvre le procédé d'alimentation selon l'invention.

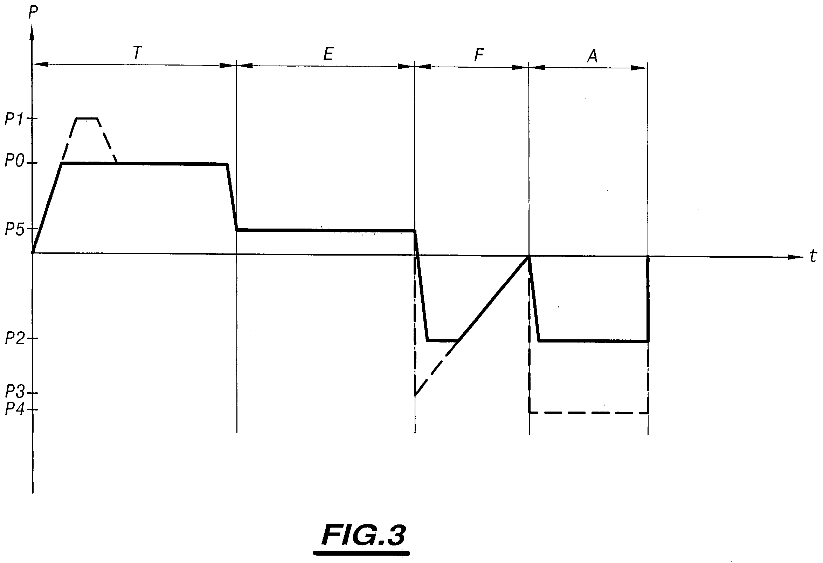

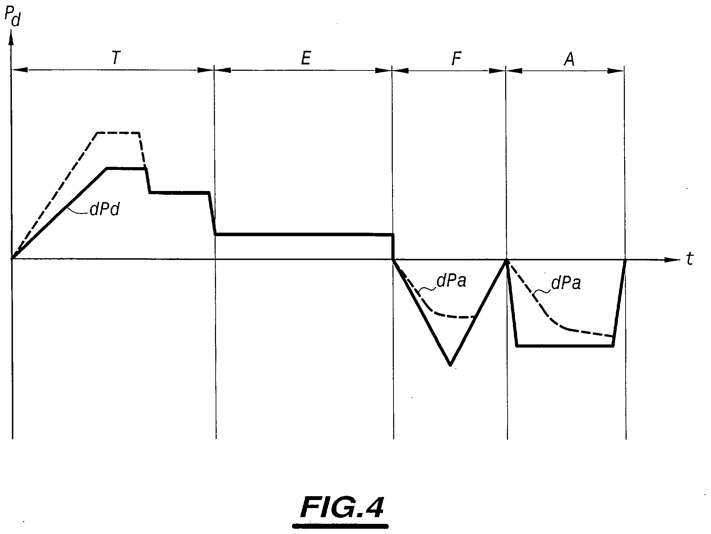

Ce procédé est illustré par les graphes des figures 3 et 4 qui représentent l'évolution temporelle des échanges de puissance et des échanges de dynamique de puissance entre le système de stockage d'énergie 19, la chaîne de traction 4 et les équipements auxiliaires 6.

Comme visible sur la courbe en trait plein de la Fig.3, lors d'une phase de propulsion ou de traction T du véhicule, le système de stockage d'énergie 19 présente un état de décharge du volant d'inertie 20 et de la batterie 22 jusqu'à atteinte de la puissance maximale délivrable P0 par l'ensemble non capacitif 20, 22 (correspondant à la somme des puissances maximales délivrables par le volant et la batterie).

Cette puissance maximale délivrable P0 dépend du type de volant d'inertie et du type de batterie de puissance monté dans le système de stockage 19. La puissance maximale pour un volant d'inertie est par exemple égale à 300 kilowatts.

Si la puissance de l'ensemble non capacitif 20, 22 n'est pas suffisante pour alimenter les moteurs 9 avec la puissance nécessaire à l'obtention de la vitesse demandée, le système de stockage d'énergie 19 présente un état de décharge de l'ensemble supercapacitif 24 pour fournir le complément de puissance P1-P0 demandé. La puissance P1 est la puissance appelée par le bus 7 pour alimenter les équipements auxiliaires 6 et la chaîne de traction 4. La courbe en pointillés sur la Fig.3 représente la puissance délivrée par l'ensemble 24.

Parallèlement, si la dynamique de puissance demandée par la chaîne de traction 4 et par les équipements auxiliaires 6 est supérieure à la dynamique de puissance maximale délivrable dPd par l'ensemble non capacitif 20, 22 (correspondant à la somme des dynamiques de puissance maximales délivrables par le volant d'inertie 20 et la batterie 22), le système de stockage d'énergie 19 présente également un état de décharge de l'ensemble supercapacitif 24 pour compléter le besoin en dynamique de puissance nécessaire. La courbe en pointillés de la Fig.4 représente la dynamique de puissance délivrée par l'ensemble capacitif 24. La courbe en trait plein de la Fig.4 représente la dynamique de puissance délivrée par l'ensemble non capacitif 20, 22.

La dynamique de puissance est définie comme la dérivée en un point de la puissance par rapport au temps. La pente dPd, représentée sur la Fig.4, délimite la dynamique de puissance maximale délivrable par l'ensemble non capacitif 20, 22. Lorsque la dynamique de puissance demandée est supérieure à la dynamique de puissance dPd définie par cette pente, l'ensemble supercapacitif 24 délivre un complément en dynamique de puissance.

Lors d'une phase d'arrêt de propulsion appelée marche sur l'erre E, le volant d'inertie 20 et la batterie 22 alimentent les équipements auxiliaires 6 avec une puissance P5 inférieure à la puissance maximale délivrable P0.

Lors d'une phase de freinage électrique F, les moteurs électriques 9 récupèrent l'énergie issue du couple de freinage et la transmettent au système de stockage 19 par l'intermédiaire du bus 7.

Le dispositif d'alimentation 2 est alors dans un état de recharge du volant d'inertie 20 et/ou de la batterie 22 ainsi que dans un état d'alimentation simultanée des équipements auxiliaires 6, avec l'énergie résultant du couple de freinage.

Lorsque l'ensemble non capacitif 20, 22 atteint sa puissance maximale admissible P2 (correspondant à la somme des puissances maximales admissibles par le volant d'inertie et la batterie), l'ensemble supercapacitif 24 est rechargé avec le complément de puissance P3 - P2 disponible sur le bus 7, comme visible sur la courbe en pointillés de la Fig.3.

La puissance P3 est la puissance issue de la chaîne de traction 4 dans les phases de freinage récupératif du véhicule.

Si la puissance générée par les moteurs 9 ne peut pas être totalement récupérée par le système de stockage d'énergie 19 et par les équipements auxiliaires 6, le surplus de puissance est consommé par une résistance de freinage non représenté, comme cela est déjà connu dans l'état de la technique.

Parallèlement, si la dynamique de puissance délivrée par le couple de freinage est supérieure à la dynamique de puissance maximale admissible dPa par l'ensemble non capacitif 20, 22 (correspondant à la somme des dynamiques de puissance maximales admissibles par le volant et par la batterie), comme dans l'exemple représenté sur la Fig.4, l'ensemble supercapacitif 24 est rechargé avec la dynamique de puissance restante. La pente dPa définit la limite de dynamique de puissance maximale admissible par l'ensemble non capacitif 20, 22.

Lorsque le véhicule est arrêté en station A, le système de stockage d'énergie 19 est rechargé par la caténaire 16 de recharge de la station. A cet effet, le calculateur 50 commande la connexion du pantographe 15 du véhicule de traction à la caténaire 16.

Comme visible sur la courbe en trait plein de la Fig.3, la recharge comprend un état de recharge du volant d'inertie 20 et de la batterie 22.

Lorsque la puissance délivrée par le dispositif de recharge 16 est supérieure à la puissance maximale admissible P2 de l'ensemble non capacitif, comme dans l'exemple représenté sur la Fig.3, l'ensemble supercapacitif 24 est rechargé avec la puissance supplémentaire P4-P2 délivrée par la caténaire 16 via le pantographe 15. La puissance P4 est la puissance de recharge issue de la caténaire.

De plus, au début du chargement, la dynamique de puissance disponible sur le bus 7 est supérieure à la dynamique de puissance maximale admissible dPa, l'ensemble supercapacitif 24 est rechargé avec cette dynamique de puissance supérieure à la dynamique de puissance dPa.

Le calculateur 50 commande l'ouverture de l'interrupteur 15 lorsque la quantité d'électricité apportée au système de stockage d'énergie 19 a atteint au minimum un niveau d'énergie suffisant pour réaliser le trajet jusqu'à la prochaine station. Cette quantité d'électricité a été précalculée de sorte que le temps d'arrêt en station soit minimum.

Alternativement, la durée de recharge du système de stockage d'énergie 19 est définie de telle sorte que ce système 19 atteigne un niveau d'énergie correspondant au niveau d'énergie qu'il présentait avant de parcourir la distance le séparant de la station précédente.

Le procédé d'alimentation des consommateurs en électricité d'un véhicule de traction a été décrit pour un système de stockage d'énergie comprenant un volant d'inertie 20, une batterie et un ensemble supercapacitif 24. Toutefois, ce procédé est identique lorsque le système de stockage d'énergie comprend plusieurs ensembles supercapacitifs 24 et une ou plusieurs batteries de puissance 22 et/ou un ou plusieurs volants d'inertie 20.

De même, bien que l'invention ait été décrite pour un véhicule de traction, elle s'applique à tous les véhicules ferroviaires, les trolleybus et autobus électriques.

De plus, dans l'exemple de réalisation de l'invention décrit ci-dessus, un pantographe et une caténaire sont utilisés comme dispositif de recharge du système de stockage d'énergie 19, toutefois un dispositif d'alimentation au sol type « rail de courant» ou un dispositif d'alimentation en station (dit «dispositif de biberonnage ») pourrait également être utilisé en variante de réalisation.

Alternativement, le dispositif d'alimentation en énergie selon l'invention est associé à un véhicule de traction comportant un moteur thermique ou une turbine. Dans ce cas, le véhicule est avantageusement mis en route par le moteur électrique, pour diminuer le bruit ou la pollution atmosphérique dans une station ou une gare ferroviaire.

Avantageusement, le dispositif d'alimentation selon l'invention permet de répondre aux besoins d'un véhicule en énergie, par utilisation du volant d'inertie ou de la batterie, et en puissance, par utilisation de l'ensemble supercapacitif.

Avantageusement, les équipements ferroviaires utilisés avec ce dispositif d'alimentation, comportent un dispositif de recharge en station uniquement au niveau des stations d'arrêt du véhicule de traction et pas de caténaires ou de rails de courant entre celles-ci.

Avantageusement, l'ensemble supercapacitif 24, capable de délivrer de fortes puissances est peu encombrant et présente une faible masse, de sorte qu'il est facilement fixé sur le toit d'un véhicule.

L'utilisation d'un véhicule de traction objet de la présente invention, va à présent être décrit.

Ce véhicule de traction est alimenté par un dispositif d'alimentation tel que décrit ci-dessus et est adapté pour se déplacer entre des stations sur des voies comprenant des tronçons de voies équipés d'une caténaire 16 et des tronçons de voies non équipés d'une caténaire 16.

Le véhicule de traction est propulsé uniquement par des moteurs électriques et ne comporte aucun moteur thermique. Il est alimenté par la caténaire 16 lorsqu'il est situé sur des tronçons de voies équipés de celle-ci et seulement par le système de stockage d'énergie 19 lorsqu'il est situé sur des tronçons de voies non équipés de celle-ci.

Lorsque le véhicule de traction arrive sur un tronçon de voies équipé d'une caténaire 16, les moyens de commande 50 sont adaptés pour piloter le raccordement des moyens de connexion 15 à la caténaire 16. Lorsque le véhicule quitte le tronçon de voies équipé d'une caténaire, les moyens de commande 50 pilotent la déconnexion des moyens de connexion 15 avec la caténaire 16.

Le système de stockage d'énergie électrique 19 est utilisé dans le véhicule de traction pour permettre d'une part de propulser le véhicule de traction lors de son déplacement et d'autre part de charger le système de stockage 19 avec une énergie électrique suffisante pour que lorsque le véhicule de traction se déplace sur un tronçon de voies non équipé d'une caténaire 16, le système de stockage 19 assure une libération d'énergie et une puissance suffisante pour que le véhicule de traction maintienne les mêmes performances dynamiques (vitesse etc) que celles qu'il présente lorsqu'il se déplace sur un tronçon de voies équipé d'une caténaire et qu'il est alimenté par celle-ci.

Ces performances dynamiques correspondent à une vitesse au moins égale à la vitesse généralement utilisée pour le transport ferroviaire de passagers.

En variante, la caténaire 16 est remplacée par un dispositif d'alimentation au sol de type rail de courant ou par un dispositif d'alimentation en station de type biberonnage localisé au niveau des stations.

Bien que l'invention ait été décrite pour un véhicule de traction, elle s'applique à tout véhicule ferroviaire de transport de passagers, tel que par exemple un tramway.

## Revendications

1. Utilisation d'un dispositif d'alimentation de consommateurs d'électricité embarqué sur un véhicule de traction destiné à effectuer un déplacement sur des voies comprenant des tronçons de voies équipés d'un dispositif de recharge (16) et des tronçons de voies non équipés d'un dispositif de recharge (16), le dispositif d'alimentation comprenant :
- des moyens de commande (50) ; et
- un système de stockage d'énergie électrique (19) comprenant un ensemble non capacitif (20, 22) comportant un ou plusieurs volants d'inertie (20) ou une ou plusieurs batteries de puissance (22) et un ou plusieurs ensembles supercapacitifs (24) comprenant plusieurs supercapacités connectées en série et/ou en parallèle, l'ensemble non capacitif (20, 22) présente une puissance maximale admissible (P2), une puissance maximale délivrable (P0), une dynamique de puissance maximale admissible (dPa) et une dynamique de puissance maximale délivrable (dPd), le véhicule étant adapté pour fonctionner selon des performances dynamiques de traction dans des phases de fonctionnement au cours desquelles le véhicule est alimenté par un dispositif de recharge (16) non embarqué sur le véhicule de traction, **caractérisé en ce que**
le dispositif d'alimentation étant utilisé pour permettre de maintenir lesdites performances dynamiques de traction du véhicule lors de phases de fonctionnement au cours desquelles le véhicule de traction est alimenté par le système de stockage d'énergie (19), et
pour que lesdits moyens de commande (50) soient adaptés pour commander une recharge de l'ensemble non capacitif (20, 22) jusqu'à atteinte de sa puissance maximale admissible (P2), et une recharge du ou de chaque ensemble supercapacitif (24) avec la puissance disponible restante (P3-P2).

2. Utilisation d'un dispositif d'alimentation selon la revendication 1, le véhicule de traction étant adapté pour effectuer un déplacement sur des voies comprenant des tronçons de voies équipés d'un dispositif de recharge (16) et des tronçon non équipés d'un dispositif de recharge (16), le véhicule de traction étant alimenté uniquement par le système de stockage d'énergie (19), lorsqu'il est situé sur des tronçons de voies non équipés du dispositif de recharge (16).

3. Utilisation d'un dispositif d'alimentation selon l'une quelconque des revendications 1 et 2, pour que le dispositif d'alimentation comprenne des moyens de connexion (15) aptes à raccorder ledit système de stockage d'énergie (19) au dispositif de recharge électrique (16) et pour que lesdits moyens de commande (50) soient adaptés pour piloter le raccordement desdits moyens de connexion (15) audit dispositif de recharge (16).

4. Utilisation d'un dispositif d'alimentation selon l'une quelconque des revendications précédentes, pour que lesdits moyens de commande (50) soient adaptés pour piloter une recharge de l'ensemble non capacitif (20, 22) jusqu'à atteinte de sa dynamique de puissance maximale admissible (dPa), et une recharge du ou de chaque ensemble supercapacitif (24) avec la dynamique de puissance supplémentaire restante.

5. Utilisation d'un dispositif d'alimentation selon l'une quelconque des revendications 1 à 4, pour que lesdits moyens de commande (50) soient adaptés pour piloter une décharge de l'ensemble non capacitif (20, 22) jusqu'à atteinte de sa puissance maximale délivrable (P0), et une décharge du ou de chaque ensemble supercapacitif (24) pour fournir le complément de puissance (P1-P0) nécessaire.

6. Utilisation d'un dispositif d'alimentation selon l'une quelconque des revendications 1 à 5, pour que lesdits moyens de commande (50) soient adaptés pour commander une décharge de l'ensemble non capacitif (20, 22) jusqu'à atteinte de sa dynamique de puissance maximale délivrable (dPd), et une décharge du ou de chaque ensemble supercapacitif (24) pour fournir la dynamique de puissance supplémentaire nécessaire.

7. Procédé d'alimentation de consommateurs d'électricité (6, 9) d'un véhicule de traction équipé d'un système de stockage d'énergie (19) comprenant un ensemble non capacitif (20, 22) comportant un ou plusieurs volants d'inertie (20) ou une ou plusieurs batteries de puissance (22) et un ou plusieurs ensembles supercapacitifs (24) comprenant plusieurs supercapacités connectées en série et/ou en parallèle, l'ensemble non capacitif (20, 22) présentant une puissance maximale admissible (P2), une puissance maximale délivrable (P0), le procédé comportant une étape de recharge dudit système de stockage (19), **caractérisé en ce que** l'étape de recharge comporte les étapes suivantes :
- recharge de l'ensemble non capacitif (20, 22) jusqu'à atteinte de sa puissance maximale admissible (P2), et
- recharge du ou de chaque ensemble supercapacitif (24) avec la puissance supplémentaire disponible (P3-P2), si la puissance fournie au système de stockage (19) est supérieure à ladite puissance maximale admissible (P2).

8. Procédé selon la revendication 7, **caractérisé en ce qu'**il comporte une étape de décharge dudit système de stockage (19) pour alimenter des consommateurs d'électricité (6, 9), l'étape de décharge comportant les étapes suivantes :
- décharge de l'ensemble non capacitif (20, 22) jusqu'à atteinte de sa puissance maximale délivrable (P0), et
- décharge du ou de chaque ensemble supercapacitif (24) pour fournir la puissance supplémentaire nécessaire (P1-P0), si la puissance demandée par les consommateurs d'électricité (6, 9) est supérieure à ladite puissance maximale délivrable (P0).

9. Support d'enregistrement comprenant un programme d'ordinateur comportant des instructions pour l'exécution des étapes du procédé selon la revendication 7 ou 8, lorsque le programme est exécuté sur ordinateur.

## Patentansprüche

1. Verwendung einer Versorgungsvorrichtung für elektrische Verbraucher, die auf einem Zugfahrzeug mitgeführt wird, das vorgesehen ist, eine Bewegung auf Wegen durchzuführen, die mit einer Aufladevorrichtung (16) ausgerüstete Wegeabschnitte und nicht mit einer Aufladevorrichtung (16) ausgerüstete Wegeabschnitte umfassen, wobei die Versorgungsvorrichtung umfasst:
- Steuerungsmittel (50); und
- ein System (19) zum Speichern von elektrischer Energie, die eine nichtkapazitive Anordnung (20, 22) umfasst, die ein oder mehrere Schwungräder (20) oder ein oder mehrere Leistungsbatterien (22) und ein oder mehrere superkapazitive Anordnungen (24), die mehrere in Reihe und/oder parallel geschaltete Superkondensatoren umfasst, aufweist, wobei die nichtkapazitive Anordnung (20, 22) eine zulässige Maximalleistung (P2), eine lieferbare Maximalleistung (P0), eine Dynamik der zulässigen Maximalleistung (dPa) und eine Dynamik (dPd) der lieferbaren Maximalleisung aufweist, und das Fahrzeug angepasst ist, gemäß dynamischer Zugleistungen in den Betriebsphasen zu arbeiten, während denen das Fahrzeug von einer Aufladevorrichtung (16) versorgt wird, die nicht auf dem Fahrzeug mitgeführt wird,
**dadurch gekennzeichnet, dass**
die Versorgungsvorrichtung verwendet wird, um zu ermöglichen, die dynamischen Zugleistungen des Fahrzeugs bei den Betriebsphasen zu halten, während denen das Zugfahrzeug von dem System (19) zum Speichern von Energie versorgt wird, und
damit die Steuerungsmittel (50) angepasst werden, eine Aufladung der nichtkapazitiven Anordnung (20, 22) bis zum Erreichen ihrer zulässigen Maximalleistung (P2) und einer Aufladung des oder jeder superkapazitiven Anordnung (24) mit der verbleibenden verfügbaren Leistung (P3 - P2) zu steuern.

2. Verwendung einer Versorgungsvorrichtung nach Anspruch 1, wobei das Zufahrzeug angepasst ist, eine Bewegung auf Wegen durchzuführen, die Wegeabschnitte, die mit einer Aufladevorrichtung (16) ausgerüstet sind, und Abschnitte, die nicht mit einer Aufladevorrichtung (16) ausgerüstet sind, umfasst, und das Zugfahrzeug allein von dem System (19) zum Speichern von Energie versorgt wird, wenn es sich auf Wegeabschnitten befindet, die nicht mit einer Aufladevorrichtung (16) ausgerüstet sind.

3. Verwendung einer Versorgungsvorrichtung nach einem beliebigen der Ansprüche 1 und 2, derart dass die Versorgungsvorrichtung Anschlussmittel (15) umfasst, die geeignet sind, das System (19) zum Speichern von Energie an die elektrische Aufladevorrichtung (16) anzuschließen und die Steuerungsmittel (50) angepasst sind, den Anschluss der Anschlussmittel (15) mit der Aufladevorrichtung (16) zu steuern.

4. Verwendung einer Versorgungsvorrichtung nach einem beliebigen der vorhergehenden Ansprüche, derart dass die Steuerungsmittel (50) angepasst sind, eine Aufladung der nichtkapazitiven Anordnung (20, 22) bis zum Erreichen ihrer Dynamik der zulässigen Maximalleistung (dPa) und eine Aufladung der oder jeder superkapazitiven Anordnung (24) mit der Dynamik der verbleibenden zusätzlichen Leistung zu steuern.

5. Verwendung einer Versorgungsvorrichtung nach einem beliebigen der Ansprüche 1 bis 4, derart, dass die Steuerungsmittel (50) angepasst sind, eine Entladung der nichtkapazitiven Anordnung (20, 22) bis zum Erreichen ihrer lieferbaren Maximalleistung (P0) und eine Entladung des oder jeder superkapazitiven Anordnung (24) zum Liefern der notwendigen Leistungsergänzung (P1-P0) zu steuern.

6. Verwendung einer Versorgungsvorrichtung nach einem beliebigen der Ansprüche 1 bis 5, derart dass die Steuerungsmittel (50) angepasst sind, eine Entladung der nichtkapazitiven Anordnung (20, 22) bis zum Erreichen ihrer Dynamik der lieferbaren Maximalleistung (dPd) und eine Entladung des oder jeder superkapazitiven Anordnung (24) zum Liefern der Dynamik der notwendigen zusätzlichen Leistung zu steuern.

7. Verfahren zur Versorgung von elektrischen Verbrauchern (6, 9) eines Zugfahrzeugs, das mit einem System (19) zum Speichern von elektrischer Energie ausgerüstet ist, das eine ein oder mehrere Schwungräder (20) aufweisende nichtkapazitive Anordnung (20, 22) oder eine oder mehrere Leistungsbatterien (22) und eine oder mehrere superkapazitiven Anordnungen (24), die mehrere in Reihe und/oder parallel geschaltete Superkondensatoren aufweisen, umfasst, wobei die nichtkapazitive Anordnung eine zulässige Maximalleistung (P2), eine lieferbare Maximalleistung (P0) aufweist, und wobei das Verfahren einen Schritt des Aufladens des Systems (19) zum Speichern umfasst, **dadurch gekennzeichnet, dass** der Aufladeschritt die folgenden Schritte umfasst:
- Aufladen der nichtkapazitiven Anordnung (20, 22) bis zum Erreichen ihrer zulässigen Maximalleistung (P2), und
- Aufladen der oder jeder superkapazitiven Anordnung (24) mit der verfügbaren zusätzlichen Leistung (P3 - P2), wenn die dem System (19) zum Speichern gelieferte Leistung größer ist als die zulässige Maximalleistung (P2).

8. Verfahren nach Anspruch 7, **dadurch gekennzeichnet, dass** es einen Schritt des Entladens des Systems (19) zum Speichern aufweist, um die elektrischen Verbraucher (6, 9) zu versorgen, wobei der Entladungsschritt die folgenden Schritte aufweist:
- Entladen der nichtkapazitiven Anordnung (20, 22) bis zum Erreichen ihrer lieferbaren Maximalleistung (P0), und
- Entladen der oder jeder superkapazitiven Anordnung (24) zum Liefern der notwendigen zusätzlichen Leistung (P1 - P0), wenn die von elektrischen Verbrauchern (6, 9) verlangte Leistung größer ist als die lieferbare Maximalleistung (P0).

9. Datenträger, ein Rechnerprogramm umfassend, das Befehle für die Ausführung der Schritte des Verfahrens nach Anspruch 7 oder 8 aufweist, wenn das Programm auf einem Rechner ausgeführt wird.

## Claims

1. A use of a power supply device for supplying power to electricity consumers, which device is on board a traction vehicle intended to move on tracks comprising track sections equipped with a recharging device (16) and track sections not equipped with a recharging device (16), the power supply device comprising:
- control means (50); and
- an electric power storage system (19) comprising a non-capacitive assembly (20, 22) including one or several flywheels (20) or one or several power batteries (22), and one or several super-capacitive assemblies (24) comprising a plurality of supercapacitors connected in series and/or in parallel, the non-capacitive assembly (20, 22) having a maximum permissible power (P2), a maximum deliverable power (P0), a maximum permissible power dynamic (dPa) and a maximum deliverable power dynamic (dPd), the vehicle being adapted to operate according to traction dynamic performance in operating phases, during which the vehicle is powered by a recharging device (16) that is not on board the traction vehicle, **characterised in that**
the power supply device is used to allow said traction dynamic performance of the vehicle to be maintained during operating phases, during which said traction vehicle is powered by the power storage system (19), and
so that said control means (50) are adapted to control a recharging of the non-capacitive assembly (20, 22) until its maximum permissible power (P2) is reached and a recharging of the one or of each super-capacitive assembly (24) with the remaining available power (P3-P2).

2. The use of a power supply device according to claim 1, the traction vehicle being adapted to move on tracks comprising track sections equipped with a recharging device (16) and sections not equipped with a recharging device (16), the traction vehicle being powered solely by the power storage system (19) when it is located on track sections not equipped with the recharging device (16).

3. The use of a power supply device according to any one of claims 1 and 2, so that the power supply device comprises connection means (15) adapted to connect said power storage system (19) to the electric recharging device (16) and so that said control means (50) are adapted to control the connection of said connection means (15) to said recharging device (16).

4. The use of a power supply device according to any one of the preceding claims, so that said control means (50) are adapted to control a recharging of the non-capacitive assembly (20, 22) until its maximum permissible power dynamic (dPa) is reached and a recharging of the one or of each super-capacitive assembly (24) with the remaining additional power dynamic.

5. The use of a power supply device according to any one of claims 1 to 4, so that said control means (50) are adapted to control a discharging of the non-capacitive assembly (20, 22) until its maximum deliverable power (P0) is reached and a discharging of the one or of each super-capacitive assembly (24) in order to supply the necessary additional power (P1-P0).

6. The use of a power supply device according to any one of claims 1 to 5, so that said control means (50) are adapted to control a discharging of the non-capacitive assembly (20, 22) until its maximum deliverable power dynamic (dPd) is reached and a discharging of the one or of each super-capacitive assembly (24) in order to supply the necessary additional power dynamic.

7. A method for supplying power to electricity consumers (6, 9) of a traction vehicle equipped with a power storage system (19) comprising a non-capacitive assembly (20, 22) including one or several flywheels (20) or one or several power batteries (22), and one or several super-capacitive assemblies (24) comprising a plurality of supercapacitors connected in series and/or in parallel, the non-capacitive assembly (20, 22) having a maximum permissible power (P2), a maximum deliverable power (P0), the method comprising a step of recharging said storage system (19), **characterised in that** the recharging step comprises the following steps:
- recharging the non-capacitive assembly (20, 22) until its maximum permissible power (P2) is reached, and
- recharging the one or each super-capacitive assembly (24) with the available additional power (P3-P2), if the power supplied to the storage system (19) is greater than said maximum permissible power (P2).

8. The method according to claim 7, **characterised in that** it comprises a step of discharging said storage system (19) in order to power electricity consumers (6, 9), the discharging step comprising the following steps:
- discharging the non-capacitive assembly (20, 22) until its maximum deliverable power (P0) is reached, and
- discharging the one or each super-capacitive assembly (24) in order to supply the necessary additional power (P1-P0), if the power requested by the electricity consumers (6, 9) is greater than said maximum deliverable power (P0).

9. A recording medium comprising a computer program including instructions for executing the steps of the method according to claim 7 or 8, when the program is executed on a computer.
